# EUROPEAN PATENT APPLICATION

(11) **EP 4 456 035 A2**
(43) Date of publication of application: **30.10.2024**
(21) Application number: 24199864.0
(22) Date of filing: 09.01.2018
(51) Int. Cl.: G08G 1/0967

(54) **CONNECTED AUTOMATED VEHICLE HIGHWAY SYSTEM**

(30) Priority: 10.01.2017 CN 201710014787; 17.05.2017 US 201762507453 P; 20.06.2017 US 201715628331
(62) Divisional of application: 18738971.3
(71) Applicant: CAVH LLC, Fitchburg, Wisconsin 53711 (US)
(72) Inventor: Ran, Bin, Fitchburg, 53711 (US); Cheng, Yang, Fitchburg, 53711 (US); Li, Shen, Fitchburg, 53711 (US); Ding, Fan, Fitchburg, 53711 (US); Jin, Jing, Fitchburg, 53711 (US); Chen, Xiaoxuan, Fitchburg, 53711 (US); Zhang, Zhen, Fitchburg, 53711 (US)
(74) Representative: Glawe, Delfs, Moll

(57) **Abstract**

This invention provides an autonomous vehicle, AV, control system comprising a) an RSU communication module configured to communicate with one or more roadside units, RSUs, (306) and to receive vehicle-specific control instructions from said one or more RSUs (306); and b) a vehicle control module configured to control a vehicle comprising said AV control system according to said vehicle-specific control instructions, wherein said vehicle-specific control instructions comprise instructions for vehicle longitudinal and lateral position; speed; and steering and control.

## Description

The present application claims priority to United States Provisional Patent Application Serial Number 62/507,453, filed May 17, 2017, United States Patent Application Serial Number 15/628,331, filed June 20, 2017, and Chinese Patent Application Serial Number CN201710014787.0, filed January 10, 2017, each of which is herein incorporated by reference in its entirety.

### FIELD

The present invention relates generally to a comprehensive system providing full vehicle operations and control for connected and automated vehicles (CAV), and, more particularly, to a system controlling CAVs by sending individual vehicles with detailed and time-sensitive control instructions for vehicle following, lane changing, route guidance, and related information.

### BACKGROUND

Autonomous vehicles, vehicles that are capable of sensing their environment and navigating without or with reduced human input, are in development. At present, they are in experimental testing and not in widespread commercial use. Existing approaches require expensive and complicated on-board systems, making widespread implementation a substantial challenge.

### SUMMARY

The present invention provides a comprehensive system providing full vehicle operations and control for connected and automated vehicle and highway systems by sending individual vehicles with detailed and time-sensitive control instructions. It is suitable for a portion of lanes, or all lanes of the highway. Those instructions are vehicle specific and they are sent by lowest level traffic control units (TCUs), which are optimized and passed from top level traffic control centers (TCCs). These TCC/TCUs are in a hierarchical structure and cover different levels of areas.

In some embodiments, the systems and methods provide a transportation management system, or use thereof, that provides full vehicle operations and control for connected and automated vehicle and highway systems by sending individual vehicles with detailed and time-sensitive control instructions for one or more or all of vehicle following, lane changing, route guidance, and related information. In some embodiments, the systems and methods comprise one or more or all of: a) a hierarchy of traffic control centers/units (TCCs/TCUs), that process information and give traffic operations instructions, wherein said TCCs and TCUs are automatic or semi-automated computational modules that focus on data gathering, information processing, network optimization, and traffic control; b) a network of Road Side Units (RSUs), that receive data flow from connected vehicles, detect traffic conditions, and send targeted instructions to vehicles, wherein, in some embodiments, said RSU network focuses on data sensing, data processing, control signal delivery, and information distribution, and point or segment TCUs can be combined or integrated with a RSU; c) a vehicle sub-system housed on one or more vehicles, collectively comprising, for example, a mixed traffic flow of vehicles at different levels of connectivity and automation; and d) communication systems, that provide wired and wireless communication services to one or more or all the entities in the system.

One or more entities may manage, control, or own one or more of the components. Entities include individuals in vehicles, private and public transportation agencies, communication providers, and third party managers. Individually managed components may be configured to communication with and control or be controlled by one or more other components. For example, an autonomous vehicle control system housed in a vehicle may comprise one or more or all of: a) a communication link with a hierarchy of traffic control centers/units (TCCs/TCUs), which process information and give traffic operations instructions, wherein said TCCs and TCUs are automatic or semi-automated computational modules that focus on data gathering, information processing, network optimization, and traffic control; b) a communication link with network of Road Side Units (RSUs), which receive data flow from connected vehicles, detect traffic conditions, and send targeted instructions to vehicles, wherein said RSU network focuses on data sensing, data processing, control signal delivery, and information distribution, and said point or segment TCU can be combined or integrated with a RSU; and a vehicle sub-system, configured to receive detailed and time-sensitive control instructions for vehicle following, lane changing, route guidance, and related information.

In some embodiments, the systems and methods are configured to be operational on a portion of the available lane(s), or all the lanes of a road or highway.

In some embodiments, information is customized for each individual vehicle served by the system; said information including one or more or all of: weather, pavement conditions, and estimated travel time; and said information including vehicle control instructions including one or more or all of speed, spacing, lane designation, and routing.

In some embodiments, information is sent from an upper level TCC/TCU to a lower level TCC/TCUs, and includes one or more or all of: a desirable speed, a desirable spacing of vehicles, a desirable traffic volume, a desirable traffic split at access points, and traffic signal timing parameters.

In some embodiments, the system employs hardware comprising one or more or all of: a power supply, traffic sensors, wired and wireless communication modules, and a data storage device and database.

In some embodiments, the systems and methods are configured for use with a sensor selected from the group consisting of: a microwave system; an inductive loop system; an inferred system; a video camera system; and a laser system.

In some embodiments, the systems and methods comprise a hierarchy of Traffic Control Centers/Units (TCCs/TCUs) comprising one or more of: Macroscopic TCCs, that process information from regional TCCs and provide control targets to regional TCCs; Regional TCCs, that process information from macroscopic and corridor TCCs and provide control targets to corridor TCCs; Corridor TCCs, that process information from the regional TCC and segment TCUs and provide control targets to segment TCUs; Segment TCUs, that process information from the corridor TCC and point TCUs and provide control targets to point TCUs; and Point TCUs, that process information from the segment TCU and RSUs and provide vehicle-based control instructions to RSUs.

In some embodiments, the Macroscopic TCC: provides control target to Regional TCCs; collects related data from regional TCCs; archives historical data in a data center, to support information processing and a strategy optimizer; provides an automatic or semi-automated computational center that focuses on data gathering, information processing, network optimization, and traffic control signals; and controls multiple regional TCCs in a large scale area and communicates with regional TCCs using high volume capacity and low latency communication media, such as optical fiber.

In some embodiments, the Regional TCC: provides control target to corridor TCCs; collects related data from corridor TCCs; archives historical data in a data center, to support the information processing and a strategy optimizer; provides an automatic or semi-automated computational center that focuses on data gathering, information processing, network optimization, and traffic control signals for a region such as a city; and controls multiple Corridor TCCs within its coverage, communicates with corridor TCCs and the upper level macroscopic TCC using high volume capacity and low latency communication media, such as optical fiber.

In some embodiments, the Corridor TCC: provides control target to segment TCUs; collects related data from segment TCUs; provides optimizer and processor modules to process information and provide control targets; provides an automatic or semi-automated computational center that focuses on data gathering, information processing, network optimization, and traffic control signals for a long roadway corridor, such as a 10-mile long freeway stretch plus local road in the vicinity; and contains a calculation server, a data warehouse, and data transfer units, with image computing ability calculating the data collected from road controllers, and controls Segment TCUs within its coverage, wherein traffic control algorithms are used to control Point TCUs (e.g. adaptive predictive traffic control algorithm), a Corridor TCC communicates with segment TCUs and its upper Regional TCC using high volume capacity and low latency communication media, such as optical fiber, and said corridor TCC covers 5-20 miles (or longer or shorter distances).

In some embodiments, the Segment TCU: provides control target to point TCUs; collects related data from point TCUs; provides optimizer and processor modules to process information and provide control targets; provides a smaller traffic control unit covering a small roadway area, and covers a road segment about 1 to 2 miles (or longer or shorter distances); and contains LAN data switching system (e.g., Cisco Nexus 7000) and an engineer server (e.g. IBM engineer server Model 8203 and ORACL data base), and communicates with Point TCUs either by wired or wireless communication media.

In some embodiments, the Point TCU: provides vehicle based control instructions to RSUs; collects related data from point RSUs; provides optimizer and processor modules to process information and provide control targets; and provides a smaller traffic control unit covering a short distance of a roadway (e.g., 50 meters), ramp metering, or intersections, which are installed for every ramp or intersection; and is connected with a number of RSU units, e.g., ten units (e.g., 1, 2, 3, 4, 5, 6, 7, 8, 9, 10, 12, 15, 20, etc.).

In some embodiments, the RSUs comprise one or more or all of: a sensing module that gathers traffic and related information; a data processing module that provides vehicle-specific measurements, including but not limited to speed, headway, acceleration / deceleration rate, the distance between carriageway markings and vehicles, angle of vehicles and central lines, and overall traffic status; a communication module that sends information between vehicles and upper level point TCU; a communication module that sends vehicle-specific driving instructions to vehicles; an interface module that shows data that is sent to an OBU system; and a power supply unit.

In some embodiments, a vehicle sub-system comprises one or more modules for: a) vehicle-control; b) traffic detection and data collection; c) wireless communication; and d) data collection and communication.

In some embodiments, the system is configured to redistribute essential vehicle driving tasks among vehicles comprising one or more or all of: providing instructions needed for navigation tasks to the vehicles; providing instructions and information for guidance tasks of: safety maintenance, traffic control/road condition, and special information; fulfilling vehicle maneuver tasks, and monitoring safety maintenance tasks, to take over if the system fails; providing data feeds for information exchange tasks at the control level, which is usually provided by the vehicle sensors in a vehicle; fulfilling vehicle control tasks, at the mechanic level, and monitoring surroundings, and standing-by as a backup system; providing vehicles with driving-critical information, some of which are difficult and expensive for vehicle-based sensors to obtain in a constantly reliable way; and fulfilling driving tasks and using each other as the backup in case of any errors or failures.

In some embodiments, the systems and methods comprise an in-vehicle interface selected from the group consisting of: audio: Voice control and Text-to-Voice; vision: Head-up-display (HUD); and vibration.

In some embodiments, the vehicle identification and tracking functions operate on any or any combination of: CV security certificate; on Board Unit (OBU) ID; mobile device ID; DGPS (differential GPS); vision sensors in combination with video recognition and object detection; and mobile LiDAR sensors.

In some embodiments, the systems and methods employ one or more communication systems selected from the group consisting of: OEM operators, such as OnStar; wireless communication service providers, such as ATT and Verizon; and public agencies who maintain the system, such as a DOT who owns optic fiber networks.

In some embodiments, the systems and method employ a communication technology selected from the group consisting of: wireless communication technologies, such as DSRC, Cellular 3G, 4G, 5G, Bluetooth; and cable communication technologies, such as Ethernet.

Thus, in some embodiments, provided herein are multi-dimensional connected and automated vehicle-highway systems, comprising hardware and software, said system comprising three dimensions: Dimension 1 (D1): vehicle automation of connected and automated vehicles; Dimension 2 (D2): connectivity of communication among humans, vehicles, and traffic environments; and Dimension 3 (D3): transportation system integration.

In some embodiments, D1 comprises one or more capabilities of: a) driver assistance employing a driving mode-specific execution by a driver assistance system of either steering or acceleration/deceleration using information about a driving environment and with an expectation that a human driver perform all remaining aspects of a dynamic driving task; b) partial automation employing a driving mode-specific execution by one or more driver assistance system of both steering and acceleration/deceleration using information about the driving environment and with an expectation that the human driver perform all remaining aspects of the dynamic driving task; c) conditional automation employing driving mode-specific performance by an automated driving system of all aspects of the dynamic driving task with an expectation that the human driver will respond appropriately to a request to intervene; d) high automation employing driving mode-specific performance by an automated driving system of all aspects of the dynamic driving task, even if the human driver does not respond appropriately to the request to intervene; and e) full automation employing full-time performance by an automated driving system of all aspects of the dynamic driving task under all roadway and environmental conditions that can be managed by a human driver.

In some embodiments, D2 comprises one or more capabilities of: a) information assistance, wherein a human driver receives simple traffic condition information from roadside units to assist driving and decision making; b) limited connected sensing, wherein the human driver and vehicle can access information via onboard unit and roadside units to better assist driving and decision making compared with the information assistance of a); c) redundant information sharing, wherein the human driver and vehicle can access multiple layers of information via on-board unit, roadside units, Traffic Operation Center (TOC), and vehicles, wherein vehicles are operated through various controlling strategies and methods, including human driving, vehicle automated driving, and TOC controlled driving; d) optimized connectivity, wherein information on the transportation network is not overloaded and redundant and wherein optimized information with reduced redundancy is provided to drivers and vehicles to facilitate optimized and safe driving.

In some embodiments, D3 comprises one or more capabilities of: a) key point system integration, wherein connected vehicles exchange information with roadside units at traffic key points (e.g., road intersections), obtain vehicle control instructions and other information to address local issues and keep smooth and safe traffic movement; b) segment system integration, wherein connected vehicles receive specific control instructions and information from a microscopic TOC to manage and control traffic of a specific road segment; c) corridor system integration, wherein connected vehicles receive navigation instructions from a macroscopic TOC (e.g., that manages citywide or statewide traffic) that controls the traffic volume, predicts traffic congestions, and proposes to the macroscopic TOC for global optimization; and d) macroscopic system integration, wherein a macroscopic TOC optimizes traffic distractions from a highest level to increase traffic efficiency, lower traffic costs of people and goods, and realize global optimization for a whole network.

In some embodiments, levels of system integration, automation, and connectivity, comprise: 1) Vehicle Automation Level, which uses the SAE definition; 2) Connectivity Level, which is defined based on information volume and content: (e.g., C0: No Connectivity: both vehicles and drivers do not have access to any traffic information; C1: Information assistance: vehicles and drivers can only access simple traffic information from the Internet, such as aggregated link traffic states, and information is of certain accuracy, resolution, and of noticeable delay; C2: Limited connected sensing:
vehicles and drivers can access live traffic information of high accuracy and unnoticeable delay, through connection with RSUs, neighboring vehicles, and other information providers (however, the information may not be complete); C3: Redundant Information Sharing: vehicles and drivers can connect with neighboring vehicles, traffic control device, live traffic condition map, and high-resolution infrastructure map (information is with adequate accuracy and almost in real time, complete but redundant from multiple sources); and C4: Optimized connectivity: optimized information is provided and smart infrastructure can provide vehicles with optimized information feed); and 3) Transportation System Integration Level, which is defined by the levels of system coordination/optimization (e.g., S0: No integration; S1: Key point system integration, covering a small area such as intersections, ramp metering, and only for the major travel mode; S2: Segment system integration, covering a short road segment such as a freeway segment between two ramp access points, and for most of the travel modes; S3: corridor system integration, covering a corridor with connecting roads and ramps, and for all coexisting traffic modes; S4: Regional system integration, covering a city or urban area; and S5: Macroscopic system integration, covering several regions and inter-regional traffic.

Also provided herein are methods employing any of the systems described herein for the management of one or more aspects of traffic control. The methods include those processes undertaken by individual participants in the system (e.g., drivers, public or private local, regional, or national transportation facilitators, government agencies, etc.) as well as collective activities of one or more participants working in coordination or independently from each other.

### ASPECTS OF THE DISCLOSURE

1. A transportation management system that provides full vehicle operations and control for connected and automated vehicle and highway systems by sending individual vehicles with detailed and time-sensitive control instructions for vehicle following, lane changing, route guidance, and related information, comprising:
   a) A hierarchy of traffic control centers/units (TCCs/TCUs), that process information and give traffic operations instructions, wherein said TCCs and TCUs are automatic or semi-automated computational modules that focus on data gathering, information processing, network optimization, and traffic control;
   b) A network of Road Side Units (RSUs), that receive data flow from connected vehicles, detect traffic conditions, and send targeted instructions to vehicles, wherein said RSU network focuses on data sensing, data processing, control signal delivery, and information distribution, and said point or segment TCU can be combined or integrated with a RSU;
   c) A vehicle sub-system, comprising a mixed traffic flow of vehicles at different levels of connectivity and automation; and
   d) Communication systems, that provide wired and wireless communication services to all the entities in the systems.
2. An autonomous vehicle control system comprising:
   a) a communication link with a hierarchy of traffic control centers/units (TCCs/TCUs), which process information and give traffic operations instructions, wherein said TCCs and TCUs are automatic or semi-automated computational modules that focus on data gathering, information processing, network optimization, and traffic control;
   b) a communication link with network of Road Side Units (RSUs), which receive data flow from connected vehicles, detect traffic conditions, and send targeted instructions to vehicles, wherein said RSU network focuses on data sensing, data processing, control signal delivery, and information distribution, and said point or segment TCU can be combined or integrated with a RSU; and
   c) a vehicle sub-system, configured to receive detailed and time-sensitive control instructions for vehicle following, lane changing, route guidance, and related information.
3. The system of aspect 1 or 2, wherein the system is configured to be operational on a portion of the available lane(s), or all the lanes of a highway.
4. The system of aspects 1-3, wherein: information is customized for each individual vehicle served by the system; said information includes weather, pavement conditions, and estimated travel time; and said information includes vehicle control instructions selected from the group consisting of speed, spacing, lane designation, and routing.
5. The system of aspects 1-4, wherein information is sent from a upper level TCC/TCU to a lower level TCC/TCUs, and include one or more of:
   a) a desirable speed,
   b) a desirable spacing of vehicles,
   c) a desirable traffic volume,
   d) a desirable traffic split at access points, and
   e) traffic signal timing parameters.
6. The system of aspects 1-5 wherein said system employs hardware comprising one or more of:
   a) a power supply,
   b) traffic sensors,
   c) wired and wireless communication modules, and
   d) a data storage device and database.
7. The system of aspects 1-6, configured for use with a sensor selected from the group consisting of:
   a) a microwave system;
   b) an inductive loop system;
   c) an inferred system;
   d) a video camera system; and
   e) a laser system.
8. The system of aspects 1-7, comprising a hierarchy of Traffic Control Centers/Units (TCCs/TCUs) comprising one or more of:
   a) Macroscopic TCCs, that process information from regional TCCs and provide control targets to regional TCCs;
   b) Regional TCCs, that process information from corridor TCCs and provide control targets to corridor TCCs;
   c) Corridor TCCs, that process information from Macroscopic and segment TCUs and provide control targets to segment TCUs;
   d) Segment TCUs, that process information from corridor/point TOCs and provide control targets to point TCUs; and
   e) Point TCUs, that process information from the segment TCU and RSUs and provide vehicle-based control instructions to RSU.
9. The system of aspect 8, wherein said Macroscopic TCC:
   a) provides control target to Regional TCCs;
   b) collects related data from regional TCCs;
   c) archives historical data in a data center, to support information processing and a Strategy Optimizer;
   d) provides an automatic or semi-automated computational center that focuses on data gathering, information processing, network optimization, and traffic control signals; and
   e) controls multiple regional TCCs in a large scale area and communicates with regional TCCs using high volume capacity and low latency communication media, such as optical fiber.
10. The system of aspect 8, wherein said Regional TCC:
   a) provides control target to corridor TCCs;
   b) collects related data from corridor TCCs;
   c) archives historical data in a data center, to support the information processing and a Strategy Optimizer;
   d) provides an automatic or semi-automated computational center that focuses on data gathering, information processing, network optimization, and traffic control signals for a region such as a city; and
   e) controls multiple Corridor TCCs within its coverage, communicates with corridor TCCs and the upper level macroscopic TCC using high volume capacity and low latency communication media, such as optical fiber.
11. The system of aspect 8, wherein said Corridor TCC:
   a) provides control target to segment TCUs;
   b) collects related data from segment TCUs;
   c) provides optimizer and processor modules to process information and provide control targets;
   d) provides an automatic or semi-automated computational center that focuses on data gathering, information processing, network optimization, and traffic control signals for a long roadway corridor, such as a 10-mile long freeway stretch plus local road in the vicinity; and
   e) contains a calculation server, a data warehouse, and data transfer units, with image computing ability calculating the data collected from road controllers, and controls Segment TCCs within its coverage, wherein a traffic control algorithm of TCC is used to control Point TCCs (e.g. adaptive predictive traffic control algorithm), a Corridor TCC communicates with segment TCUs and its upper Regional TCC using high volume capacity and low latency communication media, such as optical fiber, and said corridor TCC covers 5-20 miles.
12. The system of aspect 8, wherein said Segment TCU:
   a) provides control target to point TCUs;
   b) collects related data from point TCUs;
   c) provides optimizer and processor modules to process information and provide control targets;
   d) provides a smaller traffic control unit covering a small roadway area, and covers a road segment about 1 to 2 miles; and
   e) contains LAN data switching system (e.g. Cisco Nexus 7000) and an engineer server (e.g. IBM engineer server Model 8203 and ORACL data base), and communicates with Point TCC either by wired or wireless communication media.
13. The system of aspect 8, wherein said Point TCU:
   a) provides vehicle based control instructions to RSUs;
   b) collects related data from point RSUs;
   c) provides optimizer and processor modules to process information and provide control targets; and
   d) provides a smaller traffic control unit covering a short distance of a roadway (e.g., 50 meters), ramp metering, or intersections, which are installed for every ramp or intersection; and
   e) is connected with a number of RSU units, e.g., ten units.
14. The system of aspects 1-13, wherein said RSUs comprise:
   a) a sensing module that gathers traffic and related information;
   b) a data processing module that provides vehicle-specific measurements, including but not limited to speed, headway, acceleration / deceleration rate, the distance between carriageway markings and vehicles, angle of vehicles and central lines, and overall traffic status;
   c) a communication module that sends information between vehicles and upper level point TCU;
   d) a communication module that sends vehicle-specific driving instructions to vehicles;
   e) an interface module that shows data that is sent to an OBU system; and
   f) a power supply unit.
15. The system of aspects 1-14, comprising a vehicle sub-system comprising one or more modules for:
   a) vehicle-control;
   b) traffic detection and data collection;
   c) wireless communication; and
   d) data collection and communication.
16. The system of aspects 1-15, configured to redistribute essential vehicle driving tasks among vehicles comprising:
   a) providing instructions needed for navigation tasks to the vehicles;
   b) providing instructions and information for guidance tasks of: safety maintenance, traffic control/road condition, and special information;
   c) fulfilling vehicle maneuver tasks, and monitoring safety maintenance tasks, to take over if the system fails;
   d) providing data feeds for information exchange tasks at the control level, which is usually provided by the vehicle sensors in a vehicle;
   e) fulfilling vehicle control tasks, at the mechanic level, and monitoring surroundings, and standing-by as a backup system;
   f) providing vehicles with driving-critical information, some of which are difficult and expensive for vehicle-based sensors to obtain in a constantly reliable way; and
   g) fulfilling driving tasks and using each other as the backup in case of any errors or failures.
17. The system of aspects 1-16, comprising an in-vehicle interface selected from the group consisting of:
   a) audio: Voice control and Text-to-Voice;
   b) vision: Head-up-display (HUD); and
   c) vibration.
18. The system of aspects 1-17, wherein vehicle identification and tracking functions operate on any or any combination of:
   a) CV security certificate;
   b) on Board Unit (OBU) ID;
   c) mobile device ID;
   d) DGPS;
   e) vision sensors in combination with video recognition and object detection; and
   f) mobile LiDAR sensors.
19. The system of any of aspects 1-18, comprising use of one or more communication systems selected from the group consisting of:
   a) OEM operators, such as OnStar;
   b) wireless communication service providers, such as ATT and Verizon; and
   c) public agencies who maintain the system, such as a DOT who owns optic fiber networks.
20. The system of any of aspects 1-19, employing a communication technology selected from the group consisting of:
   a) wireless communication technologies, such as DSRC, Cellular 3G, 4G, 5G, Bluetooth; and
   b) cable communication technologies, such as Ethernet.
21. A multi-dimensional connected and automated vehicle-highway system, comprising hardware and software, said system comprising three dimensions:
   a) Dimension 1 (D1): vehicle automation of connected and automated vehicles;
   b) Dimension 2 (D2): connectivity of communication among humans, vehicles, and traffic environments; and
   c) Dimension 3 (D3): transportation system integration.
22. The system of aspect 21, wherein D1 comprises one or more capabilities of:
   a) driver assistance employing a driving mode-specific execution by a driver assistance system of either steering or acceleration/deceleration using information about a driving environment and with an expectation that a human driver perform all remaining aspects of a dynamic driving task;
   b) partial automation employing a driving mode-specific execution by one or more driver assistance system of both steering and acceleration/deceleration using information about the driving environment and with an expectation that the human driver perform all remaining aspects of the dynamic driving task;
   c) conditional automation employing driving mode-specific performance by an automated driving system of all aspects of the dynamic driving task with an expectation that the human driver will respond appropriately to a request to intervene;
   d) high automation employing driving mode-specific performance by an automated driving system of all aspects of the dynamic driving task, even if the human driver does not respond appropriately to the request to intervene; and
   e) full automation employing full-time performance by an automated driving system of all aspects of the dynamic driving task under all roadway and environmental conditions that can be managed by a human driver.
23. The system of aspect 21, wherein D2 comprises one or more capabilities of:
   a) information assistance, wherein a human driver receives simple traffic condition information from roadside units to assist driving and decision making;
   b) limited connected sensing, wherein the human driver and vehicle can access information via onboard unit and roadside units to better assist driving and decision making compared with the information assistance of a);
   c) redundant information sharing, wherein the human driver and vehicle can access multiple layers of information via on-board unit, roadside units, Traffic Operation Center (TOC), and vehicles, wherein vehicles are operated through various controlling strategies and methods, including human driving, vehicle automated driving, and TOC controlled driving;
   d) optimized connectivity, wherein information on the transportation network is not overloaded and redundant and wherein optimized information with reduced redundancy is provided to drivers and vehicles to facilitate optimized and safe driving.
24. The system of aspect 21, wherein D3 comprises one or more capabilities of:
   a) key point system integration, wherein connected vehicles exchange information with roadside units at traffic key points, obtain vehicle control instructions and other information to address local issues and keep smooth and safe traffic movement;
   b) segment system integration, wherein connected vehicles receive specific control instructions and information from a microscopic TOC to manage and control traffic of a specific road segment;
   c) corridor system integration, wherein connected vehicles receive navigation instructions from a macroscopic TOC that controls the traffic volume, predicts traffic congestions, and proposes to the macroscopic TOC for global optimization; and
   d) macroscopic system integration, wherein a macroscopic TOC optimizes traffic distractions from a highest level to increase traffic efficiency, lower traffic costs of people and goods, and realize global optimization for a whole network.
25. The system of aspect 24, wherein said traffic key points comprise road intersections.
26. The system of aspect 24, wherein said macroscopic TOC manages citywide or statewide traffic.

### DRAWINGS

FIG. **1** presents an exemplary system overview.
FIG. **2** presents an exemplary definition of a 3D CAVH (Connected Automated Vehicle Highway) system;
FIG. **3** illustrates an exemplary redistribution of driving tasks;
FIG. **4** provides a distribution of driving tasks for a typical AV (Automated Vehicle) based system;
FIG. **5** illustrates an exemplary distribution of driving tasks in an embodiment of the technology provided herein;
FIG. **6** illustrates exemplary system components;
FIG. **7** illustrates an exemplary TCU (Traffic Control Unit) subsystem;
FIG. **8** illustrates an exemplary RSU (Road Side Unit) subsystem;
FIG. **9** illustrates exemplary vehicle subsystem data flow;
FIG. **10** illustrates an exemplary communication subsystem;
FIG. **11** illustrates an exemplary point TCU;
FIG. **12** illustrates an exemplary segment TCU;
FIG. **13** illustrates an exemplary corridor TCC;
FIG. **14** illustrates an exemplary regional TCC;
FIG. **15** illustrates an exemplary macroscopic TCC (Traffic Control Center);
FIG. **16** illustrates an exemplary vehicle entering control;
FIG. **17** illustrates an exemplary vehicle exit control.
FIG. **18** illustrates an exemplary RSU Module Design.
FIG. **19** illustrates distance between carriageway markings and vehicles.
FIG. **20** illustrates angle of vehicles and road central lines.
FIG. **21** illustrates an exemplary overall traffic state.
FIG. **22** illustrates installation angle of microwave radar.
FIG. **23** illustrates an exemplary OBU module design.
FIG. **24** illustrates an exemplary TCC/ TCU structure map.
FIG. **25** presents an exemplary definition of a 3D CAVH (Connected Automated Vehicle Highway) system.

### DETAILED DESCRIPTION

Exemplary embodiments of the technology are described below. It should be understood that these are illustrative embodiments and that the invention is not limited to these particular embodiments.

### Legend

**101**-TCC&TCU subsystem: A hierarchy of traffic control centers (TCCs) and traffic control units (TCUs), which process information and give traffic operations instructions. TCCs are automatic or semi-automated computational centers that focus on data gathering, information processing, network optimization, and traffic control signals for regions that are larger than a short road segment. TCUs (also referred to as point TCU) are smaller traffic control units with similar functions, but covering a small freeway area, ramp metering, or intersections.
**102**-RSU subsystem: A network of Roadside Units (RSUs), which receive data flow from connected vehicles, detect traffic conditions, and send targeted instructions to vehicles. The RSU network focuses on data sensing, data processing, and control signal delivery. Physically, e.g. a point TCU or segment TCC can be combined or integrated with a RSU.
**103**-vehicle subsystem: The vehicle subsystem, comprising a mixed traffic flow of vehicles at different levels of connectivity and automation.
**104**-Communication subsystem: A system that provides wired / wireless communication services to some or all the entities in the systems.
**105**-Traffic data flow: Data flow contains traffic condition and vehicle requests from the RSU subsystem to TCC & TCU subsystem, and processed by TCC & TCU subsystem.
**106**-Control instructions set flow: Control instructions set calculated by TCC & TCU subsystem, which contains vehicle-based control instructions of certain scales. The control instructions set is sent to each targeted RSU in the RSU subsystem according to the RSU's location.
**107**-Vehicle data flow: Vehicle state data and requests from vehicle subsystem to RSU subsystem.
**108**-Vehicle control instruction flow: Flow contains different control instructions to each vehicle (e.g. advised speed, guidance info) in the vehicle subsystem by RSU subsystem.
**301**-Macroscopic Traffic Control Center: Automatic or semi-automated computational center covering several regions and inter-regional traffic control that focus on data gathering, information processing, and large-scale network traffic optimization.
**302**-Regional Traffic Control Center: Automatic or semi-automated computational center covering a city or urban area traffic control that focus on data gathering, information processing, urban network traffic and traffic control signals optimization.
**303**-Corridor Traffic Control Center: Automatic or semi-automated computational center covering a corridor with connecting roads and ramps traffic control that focus on corridor data gathering, processing, traffic entering and exiting control, and dynamic traffic guidance on freeway.
**304**-Segment Traffic Control Unit: Automatic or semi-automated computational center covering a short road segment Traffic control that focus on segment data gathering, processing and local traffic control.
**305**-Point Traffic Control Unit: covering a small freeway area, ramp metering, or intersections that focus on data gathering, traffic signals control, and vehicle requests processing.
**306**-Road Side Unit: receive data flow from connected vehicles, detect traffic conditions, and send targeted instructions to vehicles. The RSU network focuses on data sensing, data processing, and control signal delivery.
**307**-Vehicle subsystem: comprising a mixed traffic flow of vehicles at different levels of connectivity and automation.
**401**-Macro control target, neighbor Regional TCC information.
**403**-Regional control target, neighbor Corridor TCC information.
**405**-Corridor control target, neighbor Segment TCU information.
**407**-Segment control target, neighbor Point TCU information.
**402**-Regional refined traffic conditions, metrics of providing assigned control target.
**404**-Corridor refined traffic conditions, metrics of providing assigned control target.
**406**-Segment refined traffic conditions, metrics of providing assigned control target.
**408**-Point refined traffic conditions, metrics of providing assigned control target.
**601**-Vehicle Static & Dynamic Information:
   (1) Static Information
      1. Vehicle ID;
      2. Vehicle size info;
      3. Vehicle type info (including vehicle max speed, acceleration, and deceleration);
      4. Vehicle OBU info (Software information, Hardware information): Software of the OBU is designed in such a way that no user input is required and it can be seamlessly engaged with the portable RSU via Vehicle-to-Infrastructure (V2I) or Vehicle-to-Vehicle (V2V) communication, or both. The OBU hardware contains DSRC radio communication (or other communication technology) capability as well as Global Positioning System technology as compared with the RSU, which only needs to have DSRC radio communication (or other communication technology) capability.
   (2) Dynamic Information
      1. Timestamp;
      2. Vehicle lateral/longitudinal position;
      3. Vehicle speed;
      4. Vehicle OD information (including origin information, destination information, route choice information);
      5. Other vehicle necessary state info.
**602**-Vehicle control instructions:
   (1) Vehicle control instructions
      1. Lateral/Longitudinal position request at certain time;
      2. Advised speed;
      3. Steering and control info.
   (2) Guidance Information
      1. Weather;
      2. Travel time/Reliability;
      3. Road guidance.
**701**-Department of Transportation owned;
**702**-Communication Service Provider (CSP);
**703**-OEM;
**801**-Optimizer: Producing optimal control strategy, etc.;
**802**-Processor: Processing the data received from RSUs.

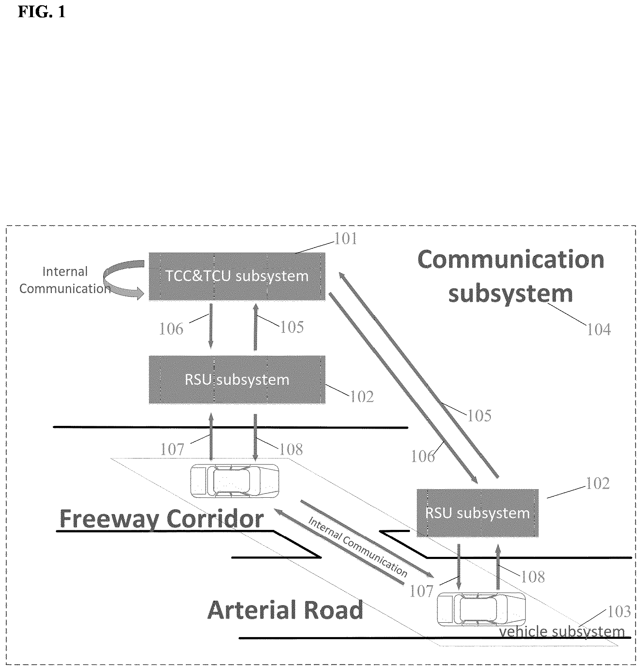

In some embodiments, as shown in FIG. **1****,** the system contains TCC/TCU subsystem **101,** RSU subsystem **102,** vehicle subsystem **103,** and communication subsystem **104.** TCC/TCU subsystem **101** is a hierarchical traffic control network of Traffic Control Centers (TCCs) and local traffic controller units (TCUs), which process traffic information from RSU subsystem **102** and give traffic operation instructions to RSU subsystem **102.** RSU subsystem **102** is a network of Roadside Units, which process traffic detection, communication, control instructions, and emissions. Vehicle subsystem **103** is a mixed traffic flow of vehicles at different levels of connectivity and automation, which send static, dynamic information and requests of vehicles to RSU subsystem **102,** and receive instructions from RSU subsystem. RSU subsystem **102** transfers vehicle data and requests from vehicle subsystem **103** into traffic information, and sends it to TCC/TCU subsystem **101** by communication system **104.** TCC/TCU subsystem **101** processes the information in the proper layer and sends operation instructions back to RSU subsystem **102.** RSU subsystem **102** screens and catalogues the operation instructions and sends the instructions **108** to each vehicle (e.g. advised speed, guidance information). Communication subsystem **104** is a wireless communication and security system with local and global connectivity, providing wired and wireless communication services to all the entities in the systems.

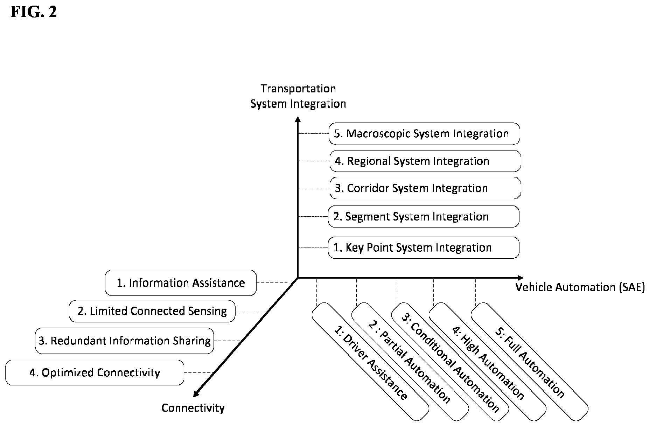

As shown in FIG. **2 (a),** the attributes of such a system, regarding levels of system integration, automation, and connectivity, is defined as:
i. Vehicle Automation Level uses the SAE definition.
ii. Connectivity Level is defined based on information volume and content:
   1. C0: No Connectivity
      Both vehicles and drivers do not have access to any traffic information.
   2. C1: Information Assistance
      Vehicles and drivers can only access simple traffic information from the Internet, such as aggregated link traffic states. Information is of certain accuracy, resolution, and of noticeable delay.
   3. C2: Limited Connected Sensing
      Vehicles and drivers can access live traffic information of high accuracy and unnoticeable delay, through connection with RSUs, neighbor vehicles, and other information providers. However, the information may not be complete.
   4. C3: Redundant Information Sharing
      Vehicles and drivers can connect with neighbor vehicles, traffic control device, live traffic condition map, and high-resolution infrastructure map. Information is with adequate accuracy and almost in real time, complete but redundant from multiple sources.
   5. C4: Optimized Connectivity
      Vehicles and drivers are provided with optimized information. Smart infrastructure can provide vehicles with optimized information feed.
iii. System Integration Level is defined based on coordination/optimization scope:
   1. S0: No Integration
      There is no integration between any systems.
   2. S1: Key Point System Integration (e.g., RSU based control for intersections, ramp metering)
      System integration occurs at intersection or ramp metering area. However, coordination/optimization scope is very small.
   3. S2: Segment System Integration (e.g., optimizing traffic on University Ave. within the campus)
      Scope becomes larger and more RSUs and vehicles are involved in the coordination and optimization. The traffic modes will remain the same.
   4. S3: Corridor System Integration (e.g., highway and local street integration, across different traffic modes)
      Coordination and optimization will cross different traffic modes and a whole freeway or arterial will be considered. RSUs and vehicles by share the information with each other will achieve system optimal in target scope.
   5. S4: Macroscopic System Integration (e.g., city or statewide)
      City or statewide coordination and optimization is achieved by connecting RSUs and vehicles in very large scope.

Unless specified otherwise, any of the embodiments described herein may be configured to operate with one or more of the Connectivity Levels in each combination with one or more of the System Integration Levels.

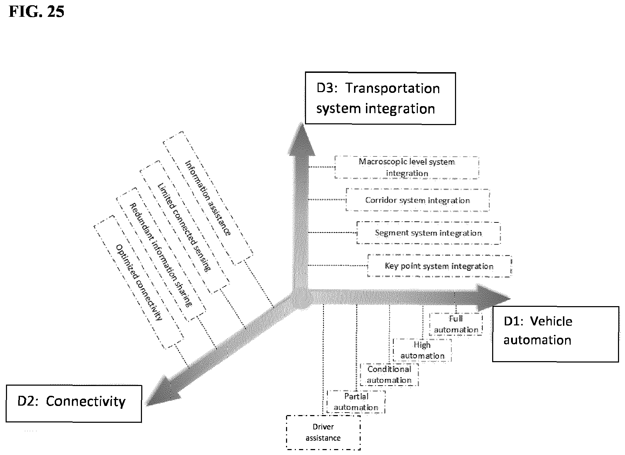

For example, in some embodiments, provided herein is a three-dimensional connected and automated vehicle-highway system (see e.g., Fig. 25). The exemplary system in Fig. 25 includes three dimensions: Dimension 1 (D1): vehicle automation, defines the development stages of connected and automated vehicles, adopting the SAE vehicle automation definition (e.g., driver assistance, partial automation, conditional automation, high automation, and full automation). Dimension 2 (D2): connectivity, defines the development stages of communication technologies, is about the communication among human, vehicles, and the traffic environment (e.g., information assistance, limited connected sensing, redundant information sharing, and optimized connectivity). Dimension 3 (D3): transportation system integration, defines the development stages of transportation system (e.g., key point system integration, segment system integration, corridor system integration, and macroscopic level system integration). This system provides a comprehensive system for the connected and automated vehicles and highways, by integrating, coordinating, controlling, managing, and optimizing all related vehicles, information services, facilities, and systems.

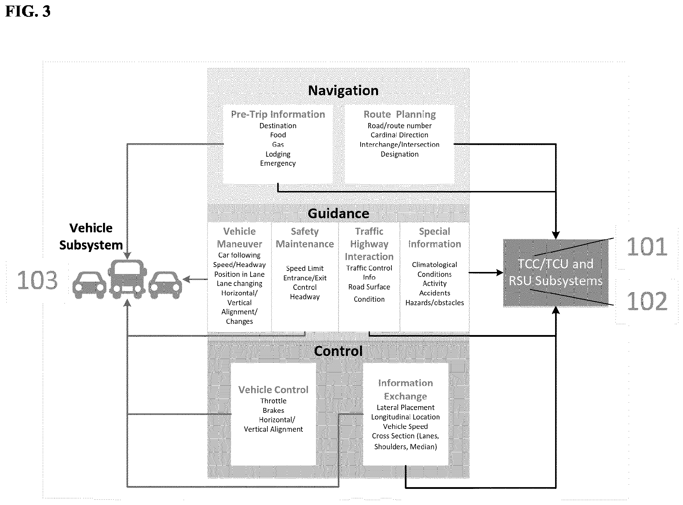

FIG. **3** shows (1) all the driving tasks among the originally defined three broad levels of performance: "Control", "Guidance", and "Navigation", according to the original definition of driving task by Lunenfeld and Alexander in 1990 (A User's Guide to Positive Guidance (3rd Edition) FHWA SA-90-017, Federal Highway Administration, Washington, DC). Those driving tasks are essential for all vehicles to drive safely from origins to destinations, and (2) how those tasks are distributed into and covered by the Vehicle Subsystem **103** and TCC/TCU **101+** RSU **102** subsystems. In the "Navigation" level, the TCC/TCU **101+** RSU **102** subsystems provide the instructions to the vehicles, including the "Pre-trip information" and "Route planning" needed for vehicles. In the "Guidance" level, the TCC/TCU **101+** RSU **102** subsystems provide the instructions and information for the Guidance tasks: Traffic Control/Road Condition, and Special Information. The Vehicle subsystem **103** fulfills the Vehicle Maneuver tasks, and monitors the Safety Maintenance tasks in addition to the operation of the TCC/TCU **101+** RSU **102.** In the "Control" level, the TCC/TCU **101+** RSU **102** subsystems provide data needs for the Information Exchange tasks. At the same time, the vehicle subsystem **103** fulfills Vehicle Control tasks, at the mechanic level, and monitors the surroundings, standing-by as the backup system.

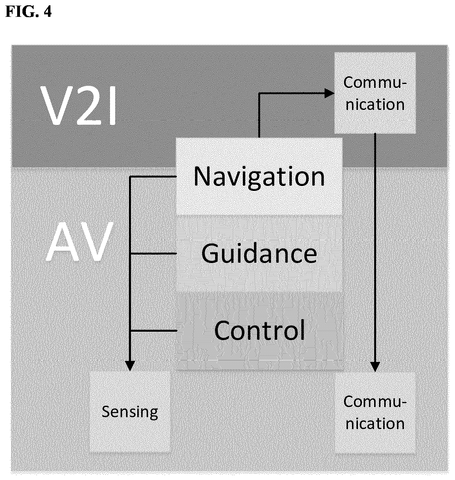

FIG. **4** shows the driving tasks distribution for the typical traditional Automated Vehicle (AV) based system solution. The Automated Vehicle, with the support of sensing technology like radars, cameras, etc., takes over most of the driving tasks among three levels while the "Vehicle-to-infrastructure" (V2I) technology provides support mostly in the "Navigation" level. The V2I typically uses communication technology like Dedicated Short Range Communications (DSRC) to fulfill its command and information exchange intentions. However, the traditional V2I technology has limitations. One of the major issue is that it contains only a single point-of-failure, which means that whenever the server or the link to the server fails, the system will fail immediately. The failure will lead to the loss of data, and endanger the whole system.

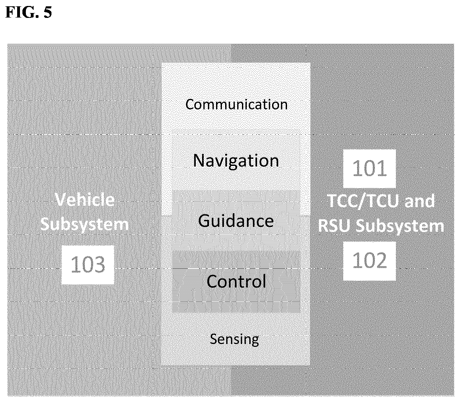

FIG. **5** shows the driving tasks distribution of embodiments of the present system. The Vehicle Subsystem **103,** together with the TCC /TCU **101** and RSU **102** Subsystem, takes over all the driving tasks among the three performance levels. The sensing and communication technology is used both by Vehicle Subsystem **103** and the TCC /TCU **101** and RSU **102** Subsystem to support the present system. The sensing serves in the level of both "Control" and "Guidance" while the communication serves in the "Navigation" and "Guidance" Levels. The collaboration of the Vehicle subsystem **103,** together with the TCC /TCU **101** and RSU **102** subsystem brings the system a redundancy, which provides the system the benefits of safety, reliability and cost effectiveness. Specifically, the dual-security system provides a fail-safe mechanism. When one of the subsystems fails, the others ensure the entire system working properly.

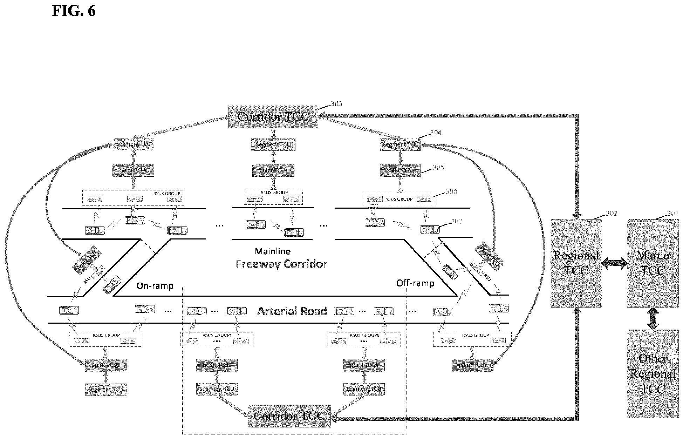

As shown in FIG. **6****,** the Fully-Controlled Connected Automated Vehicle Highway System contains components listed as follows: The Macroscopic Traffic Control Center (Marco TCC) 301, which is automatic or semi-automated computational center covering several regions and inter-regional traffic control that focus on data gathering, information processing, and large-scale network traffic optimization. The Regional Traffic Control Center (Regional TCC) 302, which is automatic or semi-automated computational center covering a city or urban area traffic control that focus on data gathering, information processing, urban network traffic control optimization. The Corridor Traffic Control Center (Corridor TCC) 303, which is automatic or semi-automated computational center covering a corridor with connecting roads and ramps traffic control that focus on corridor data gathering, processing, traffic entering and exiting control, and dynamic traffic guidance on freeway. The Segment Traffic Control Unit (Segment TCU) 304, which is a local automatic or semi-automated control unit covering a short road segment traffic control that focus on segment data gathering, processing and local traffic control. Point Traffic Control Unit (Point TCU) 305, which is an automatic control unit covering a small freeway area, ramp metering, or intersections that focus on data gathering, traffic signals control, and vehicle requests processing. The Marco TCC 301, Regional TCC 302, Corridor TCC 303, Segment TCU 304 and Point TCU 305 are the components of TCC/TCU subsystem 101. The Road Side Units (RSU 306), which represents small control units that receive data and requests from connected vehicles, detect traffic state, and send instructions to targeted vehicles. The network comprising RSUs 306 is the RSU subsystem 303, which focuses on data sensing, data processing, and control signal delivery. The connected and automated vehicles 307 is the basic element of vehicle subsystem 304, including vehicles at different levels of connectivity and automation. OBU (On-Board Unit with sensor and V2I communication units) network is embedded in connected and automated vehicles 307.

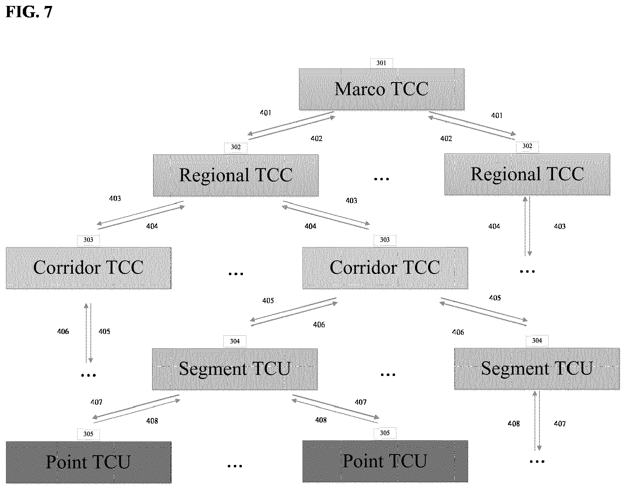

As shown in FIG. **7****,** the top level macroscopic traffic control center (TCC) **301** sends control target such as regional traffic control and boundary information **401** to second level regional TCC **302.** At the same time, regional TCC **302** sends refined traffic conditions **402** such as congestion condition back to macroscopic TCC **301,** which helps macroscopic TCC **301** to deal with large-scale network traffic optimization. Similar processes are carried out between every two consecutive levels. Regional TCC **302** sends control target and boundary information **403** to corridor TCC **303** and receives refined traffic condition **404.** Corridor TCC **303** sends control target and boundary information **405** to segment traffic control unit (TCU) **304** and receives refined traffic condition **406.** Segment TCU **304** sends control target and boundary information **407** to point TCUs **305** and receives point TCUs' **305** refined traffic conditions **408.**

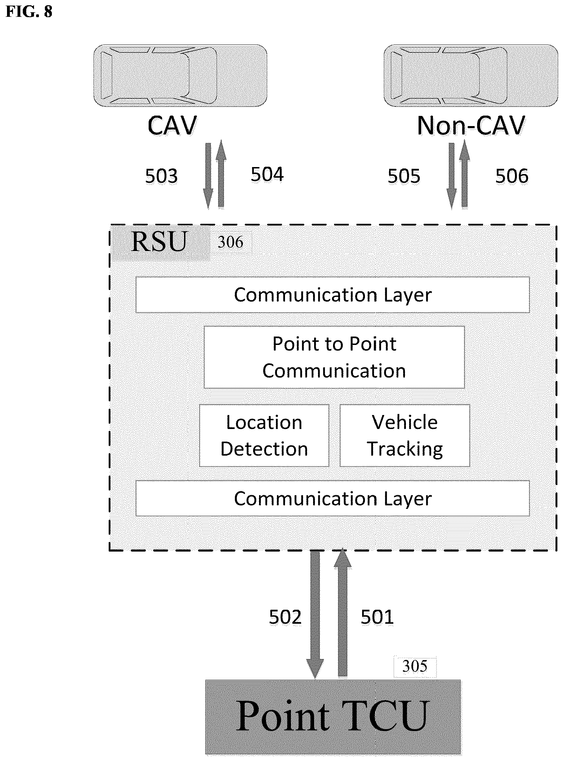

As shown in FIG. **8****,** Road side unit group **306** receives data from CAV and Non-CAV and detects traffic conditions. Then, Road side unit group **306** sends data to point traffic control unit **305.** After receiving all data from the Road side unit group **306** that is located in the covering area, point traffic control unit **305** optimizes traffic control strategy for all area and sends targeted instructions to Road side unit group **306.**

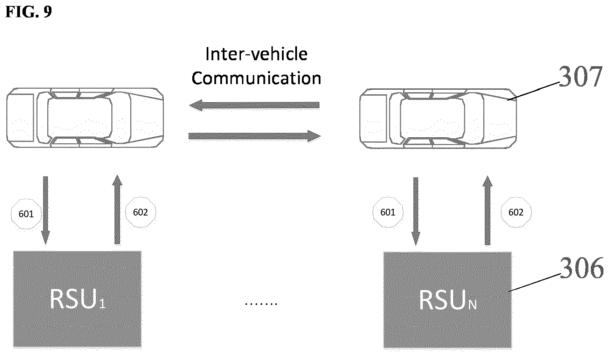

As shown in FIG. **9****,** road side unit group **306** receives data from connected vehicles **307,** detects traffic conditions, and sends targeted instructions to vehicles **307.** The RSU network focuses on data sensing, data processing, and control signal delivering. Information is also shared by different vehicles **307** that have communication with each other. Vehicles **307** also is a subsystem that can comprise a mixed traffic flow of vehicles at different levels of connectivity and automation.

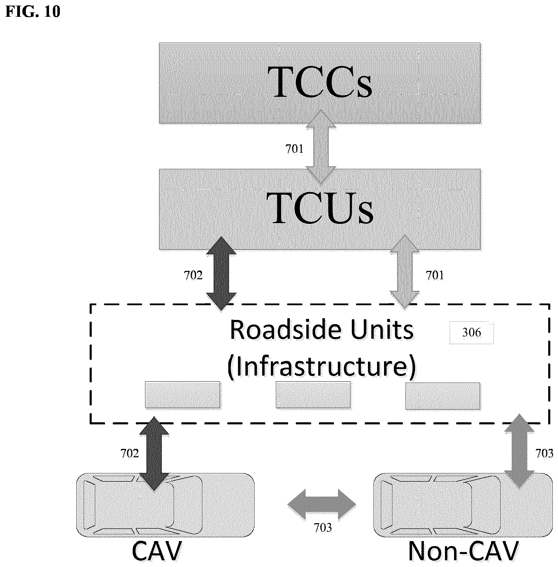

As shown in FIG. **10****,** Department of Transportation **701** controls the communication information between traffic control centers (TCC) and traffic control units (TCU). The information between TCUs and roadside units (RSU) is shared with Department of Transportation **701** and communication service provider **702.** The communication service provider **702** also controls data between roadside units and connected automated vehicle(CAV). The communication between non-CAV and CAV, and between RSU and non-CAV, is controlled by OEM **703.**

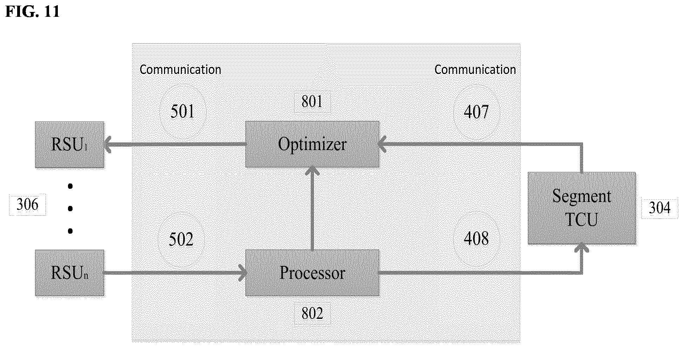

As shown in FIG. **11****,** RSU **306** collects traffic data from highway and passes the traffic information **502** to optimizer **801** and processor **802.** After receiving data, processor **802** processes it and generates current traffic conditions **408,** which is delivered to Segment TCU **304.** Segment TCU **304** decides the control target **407** to be controlled and informs optimizer **801** about it. Optimizer **801** optimizes the plan based on traffic information **502** and control target **407** and returns the vehicle-based control instructions **501** to RSU **306.**

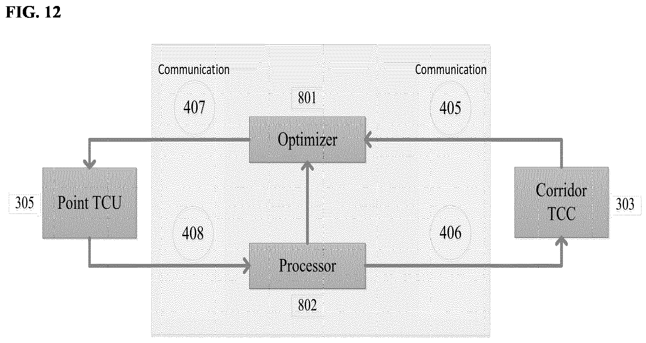

As shown in FIG. **12****,** Point TCU **305** generates current traffic conditions **408** and passes them to optimizer **801** and processor **802.** After receiving the condition information, processor **802** processes it and generates current segment traffic conditions **406,** which is delivered to Corridor TCC **303.** Corridor TCC **303** decides the control target **405** to be controlled and informs optimizer **801** about it. Optimizer **801** optimizes the plan based on traffic conditions **408** and control target **405** and returns control target **407** for Point TCU **305.**

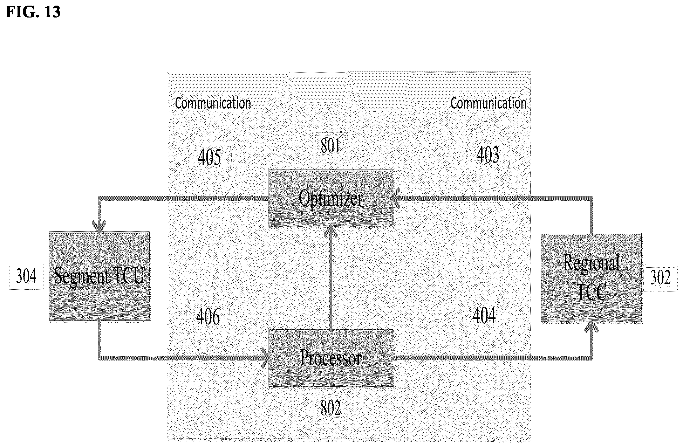

As shown in FIG. **13****,** Segment TCU **304** generates current segment traffic conditions **406** and passes them to optimizer **801** and processor **802.** After receiving the condition information, processor **802** processes it and generates current corridor traffic conditions **404,** which is delivered to Regional TCC **302.** Regional TCC **302** decides the control target **403** to be controlled and informs optimizer **801** about it. Optimizer **801** optimizes the plan based on segment traffic conditions **406** and control target **403** and returns control target **405** for Segment TCU **304.**

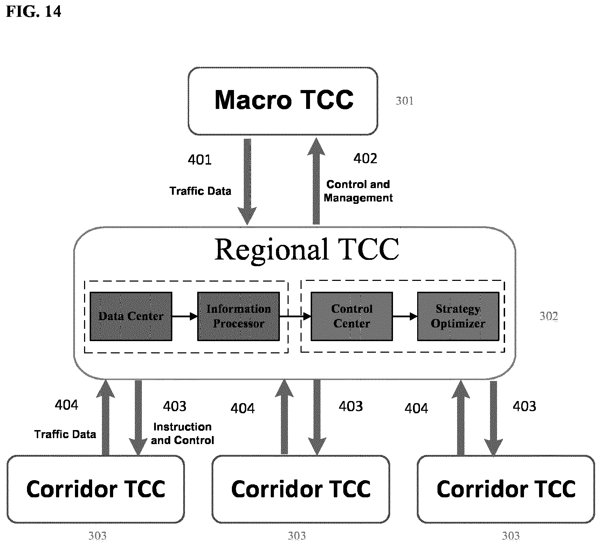

FIG. **14** shows the data and decision flow of Regional TCC **302.** Each Corridor TCC **303** collectively sends all the traffic data to the Regional TCC **302.** After the data is received by the data center, all the data is processed by the information processor. The information processor integrates traffic data and sends it to the control center. The control center makes draft-decision by a preset algorithm and sends the result to strategy optimizer. The optimizer simulates the decision and optimizes it and sends it to both Corridor TCC **303** and Macro TCC **301.** Macro TCC **301** shares traffic data from other Regional TCCs **302** nearby and system optimized decision back to the Regional TCC **302.**

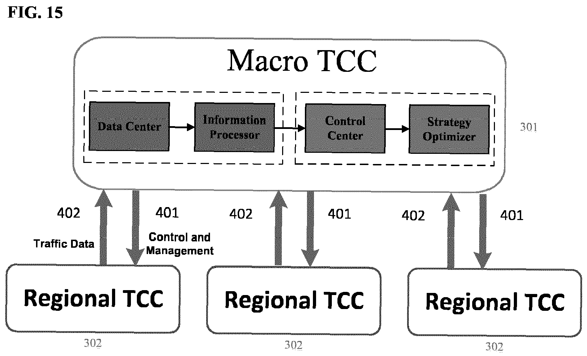

As shown in FIG. **15****,** each Regional TCC **302** sends the traffic data and local optimized strategy to the Macro TCC **301.** An information processor integrates all optimized strategies and traffic data. After that, the control center makes a draft-decision based on the traffic data from Regional TCCs **303.** The draft-decision is then processed by the strategy optimizer. A final system-optimized decision is made and sent back to the Regional TCCs **303.**

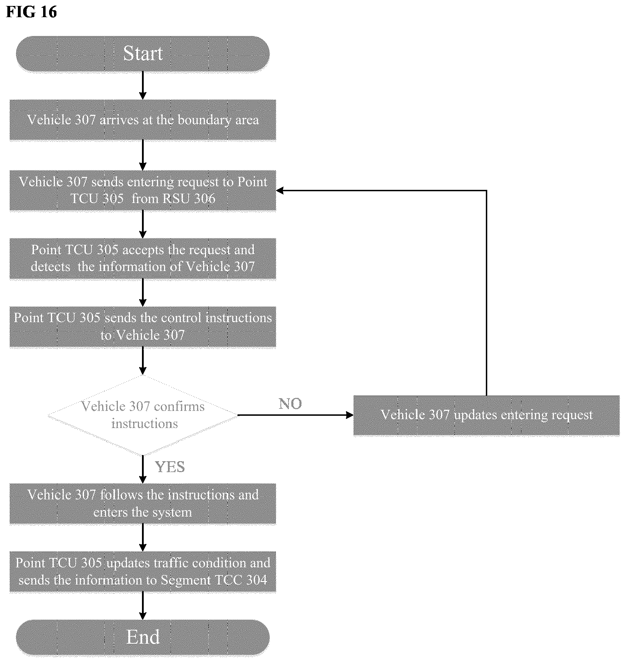

FIG. **16** illustrates the process of vehicles **307** entering the fully-controlled system. As shown in FIG. **16****,** vehicles **307** send the entering requests to RSUs **306** after arriving at the boundary area of the system. The boundary area refers to the area around the margin of a Segment TCU's **304** control range. RSUs **306** provide the entering requests to Point TCUs **305** and detect the information of vehicles 307, including static and dynamic vehicle information **6.2,** after Point TCUs **305** accept the entering requests. Point TCUs **305** formulate the control instructions **6.1** (such as advised speed, entering time, entering position, etc.) for vehicles **307** to enter the fully-controlled system and attempt to take over the control of vehicles **307,** based on the information detected by RSUs **306.** Vehicles **307** receive the control instructions **6.1** from RSUs **306** and process the instructions **6.1** with the inner subsystems to decide whether the instructions **6.1** can be confirmed. Vehicles **307** update and send the entering requests again if the control instructions **6.1** cannot be confirmed based on the judgment of the inner subsystems. Vehicles **307** drive following the control instructions **6.1** and enter the fully-control system if the control instructions **6.1** are confirmed. Point TCUs **305** take over the driving control of vehicles **307,** and vehicles **307** keep driving based on the control instructions **6.1** provided from the fully-controlled system. Point TCUs **305** update the traffic condition and send the refined information **4.8** to the Segment TCU **304** after vehicles **307** enter the fully-controlled system.

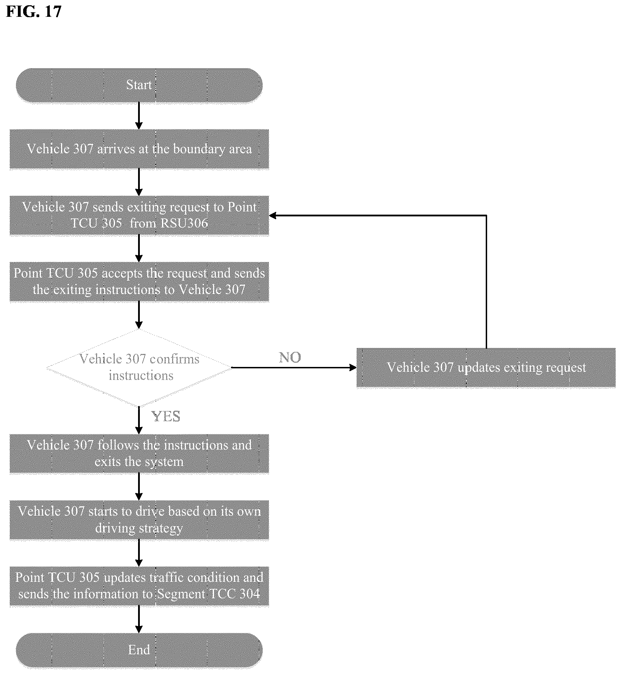

FIG. **17** illustrates the process of vehicles **307** exiting the fully-controlled system. As shown in FIG. **17****,** vehicles **307** send the exiting requests to RSUs **306** after arriving at the boundary area of the system. The boundary area refers to the area around the margin of a Segment TCU's **304** control range. RSUs **306** provide the exiting requests to Point TCUs **305.** Point TCUs **305** formulate the exiting instructions **6.1** (such as advised speed, exiting time, exiting position, etc.) for vehicles **307** to exit the fully-controlled system based on the information detected by RSUs **306.** Vehicles **307** receive the exiting instructions **6.1** from RSUs **306** and process the instructions **6.1** with the inner subsystems to decide whether the instructions **6.1** can be confirmed. Vehicles **307** update and send the entering requests again if the exiting instructions **6.1** can't be confirmed based on the judgment of the inner subsystems. Vehicles **307** drive following the exiting instructions **6.1** and exit the fully-control system if the exiting instructions **6.1** are confirmed. Point TCUs **305** terminate the driving control of vehicles **307,** and vehicles **307** start the autonomous driving and follow their own drive strategies after conducting the exiting constructions. Point TCUs **305** update the traffic condition and send the refined information **4.8** to the Segment TCU **304** after vehicles **307** exit the fully-controlled system.

### EXAMPLE

The following example provides one implementation of an embodiment of the systems and methods of the technology herein, designed for a freeway corridor.

### 1. RSU

### RSU Module Design

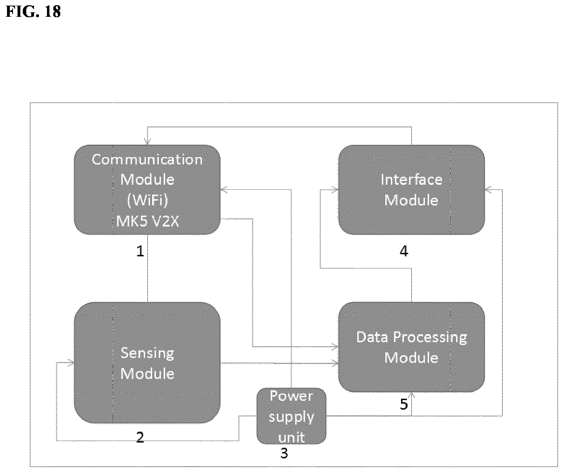

As shown in Figure 18, a RSU has two primary functions: 1) communication with vehicles and point traffic control units (TCUs), and 2) collecting traffic and vehicle driving environmental information. The sensing module (2) gathers information using various detectors described in detail in the following sections. The data processing module (5) uses data fusion technology to obtain six major feature parameters, namely speed, headway, acceleration / deceleration rates, the distance between carriageway markings and vehicles, angle of vehicles and central lines, and overall traffic status. Meanwhile, the communication module (1) also sends information received from vehicles and point TCUs to the data processing module (5) to update the result of the module. After six feature parameters are generated, the communication module (1) sends driving instructions to the OBU system installed on an individual vehicle, and shares the information with point TCUs. The interface module (4) will show the data that is sent to the OBU system. The power supply unit (3) keeps the power to maintain the whole system working.

### Communication module

### Communication with vehicles

Hardware Technical Specifications:
- Standard Conformance: IEEE 802.11p - 2010
- Bandwidth: 10 MHz
- Data Rates: 10 Mbps
- Antenna Diversity CDD Transmit Diversity
- Environmental Operating Ranges: -40°C to + 55°C
- Frequency Band: 5 GHz
- Doppler Spread: 800 km/h
- Delay Spread: 1500ns
- Power Supply: 12/24V

Exemplary on-market components that may be employed are:
A. MK5 V2X from Cohda Wireless (http://cohdawireless.com)
B. StreetWAVE from Savari (http://savari.net/technology/road-side-unit/)

### Communication with point TCUs

Hardware Technical Specifications:
- Standard Conformance: ANSI/TIA/EIA-492AAAA and 492AAAB
- Optical fiber
- Environmental Operating Ranges: -40°C to + 55°C

Exemplary on-market components that may be employed are: Optical Fiber from Cablesys https://www.cablesys.com/fiber-patch-cables/?gclid=CjOKEQjwldzHBRCfg_aImKrf7N4BEiQABJTPKH_q2wbjNLGBhBV QVSBogLQMkDaQdMm5rZtyBaE8uuUaAhTJ8P8HAQ

### Sensing module

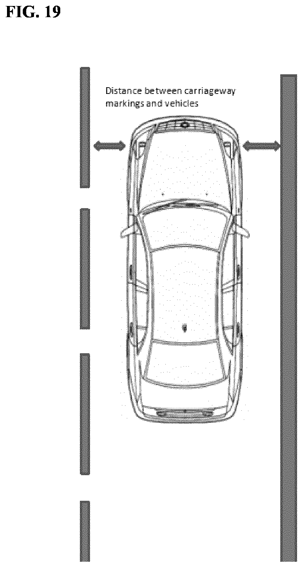

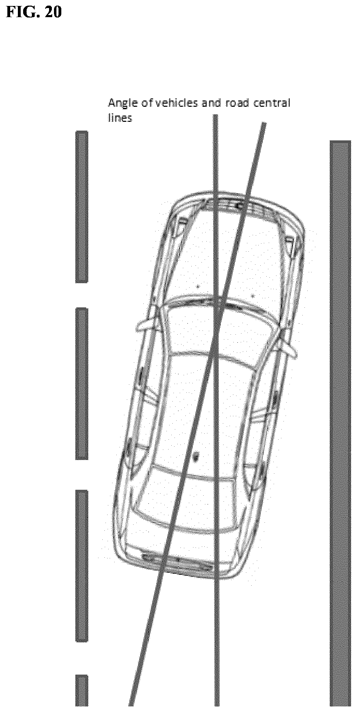

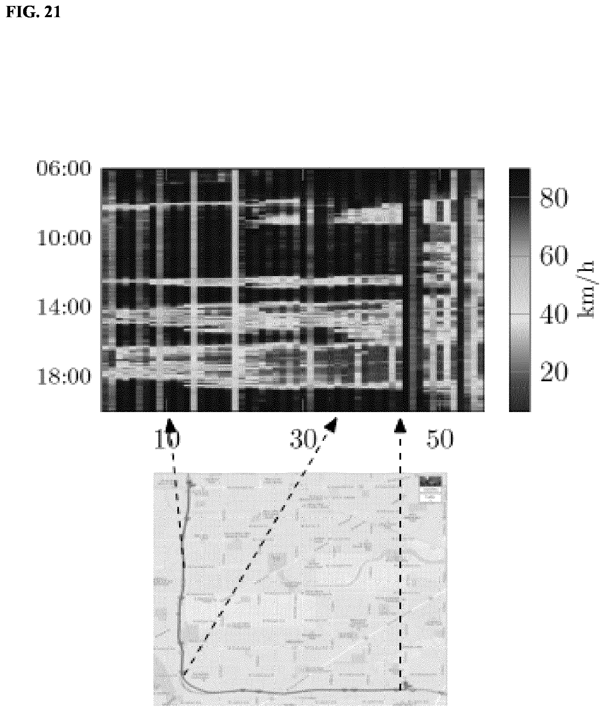

Six feature parameters are detected.
- Speed
   ∘ Description: Speed of individual vehicle
   ∘ Frequency: 5 Hz
   ∘ Error: less than 5 mile/h with 99% confidence
- Headway
   ∘ Description: Difference in position between the front of a vehicle and the front of the next vehicle
   ∘ Frequency: 5 Hz
   ∘ Error: less than 1 cm with 99% confidence
- Acceleration / Deceleration
   ∘ Description: Acceleration / Deceleration of individual vehicle
   ∘ Frequency: 5 Hz
   ∘ Error: less than 5 ft/ s² with 99% confidence
- Distance between carriageway markings and vehicles
   ∘ See, FIG. 19
   ∘ Frequency: 5Hz
   ∘ Error: Less than 5cm with 99% confidence
- Angle of vehicles and road central lines
   ∘ See, Fig. 20
   ∘ Frequency: 5Hz
   ∘ Error: less than 5° with 99% confidence
- Overall traffic state
   ∘ See, Fig. 21
   ∘ Frequency: 5Hz
   ∘ Error: less than 5% error with space resolution of 20 meters

### SESING_MODULE_TYPE_A (LIDAR + Camera + Microwave radar):

### a. LIDAR

Hardware technical Specifications
- Effective detection distance greater than 50 m
- Scan rapidly over a field of view of 360°
- Detection error is 99% confidence within 5cm

Exemplary on-market components that may be employed are:
A. R-Fans_16 from Beijing Surestar Technology Co. Ltd http://www.isurestar.com/index.php/en-product-product.html#9
B. TDC-GPX2 LIDAR of precision-measurement-technologies
   http://pmt-fl.com/
C. HDL-64E of Velodyne Lidar
   http://velodynelidar.com/index.html

Software technical Specifications
- Get headway between two vehicles
- Get distance between carriageway markings and vehicles
- Get the angel of vehicles and central lines.

Exemplary on-market components that may be employed are: LIDAR in ArcGIS

### b. Camera

Hardware technical Specifications
- 170 degree high-resolution ultra-wide-angle
- Night Vision Capable

Software technical Specifications
- The error of vehicle detection is 99% confidence above 90%
- Lane detection accuracy is 99% confidence above 90%
- Drivable path extraction
- Get acceleration of passing vehicles

### Exemplary on-market components that may be employed are: EyEQ4 from Mobileye http://www.mobileye.com/our-technology/

The Mobileye system has some basic functions: vehicle and pedestrian detection, traffic sign recognition, and lane markings identification (see e.g., barrier and guardrail detection, US20120105639A1, image processing system, EP2395472A1, and road vertical contour detection, US20130141580A1, each of which is herein incorporated reference in its entirety. See also US20170075195A1 and US20160325753A1, herein incorporated by reference in their entireties.

The sensing algorithms of Mobileye use a technique called Supervised Learning, while their Driving Policy algorithms use Reinforcement Learning, which is a process of using rewards and punishments to help the machine learn how to negotiate the road with other drivers (e.g., Deep learning).

### c. Microwave radar

Hardware technical Specifications
- Reliable detection accuracy with isolation belt
- Automatic lane segmentation on the multi-lane road
- Detection errors on vehicle speed, traffic flow and occupancy are less than 5%
- Ability to work under temperature lower than -10°C

Exemplary on-market components that may be employed are: STJ1-3 from Sensortech
http://www.whsensortech.com/

Software technical Specifications
- Get speed of passing vehicles
- Get volume of passing vehicles
- Get acceleration of passing vehicles

In some embodiments, data fusion technology is used such as the product from DF Tech to obtain six feature parameters more accurately and efficiently, and to use a backup plan in case one type of detectors has functional problems.

### SESING_MODULE_TYPE_B (Vehicle ID Recognition Device):

Hardware technical Specifications
- Recognize a vehicle based on OBU or vehicle id.
- Allowable speed of vehicle movement is up to 150km/h
- Accuracy in daylight and at nighttime with artificial illumination is greater than 90% with 99% confidence
- Distance from system to vehicle is more than 50m

Exemplary on-market components that may be employed are:
A. Products for Toll Collection - Mobility - SiemensProducts for Toll Collection - Mobility - Siemens https://www.mobility.siemens.com/mobility/global/en/urban-mobility/road-solutions/toll-systems-for-cities/products-for-toll-collection/pages/products-for-toll-collection.aspx
B. Conduent^{™} - Toll Collection SolutionsConduent^{™} - Toll Collection Solutions https://www.conduent.com/solution/transportation-solutions/electronic-toll-collection/

Software technical Specifications
- Recognize the vehicle and send the information to the database to link the six feature parameter to each vehicle.

Exemplary on-market components that may be employed are: Siemens.

### Data Processing Module

The function of data processing module is to fuse data collected from multiple sensors to achieve the following goals.
- Accurate positioning and orientation estimation of vehicles
- High resolution-level traffic state estimation
- Autonomous path planning
- Real time incident detection

Exemplary on-market components that may be employed are: External Object Calculating Module (EOCM) in Active safety systems of vehicle (Buick LaCrosse). The EOCM system integrates data from different sources, including a megapixel front camera, all-new long-distance radars and sensors to ensure a faster and more precise decision-making process. (See e.g., US8527139 B1, herein incorporated by reference in its entirety).

### Installation:

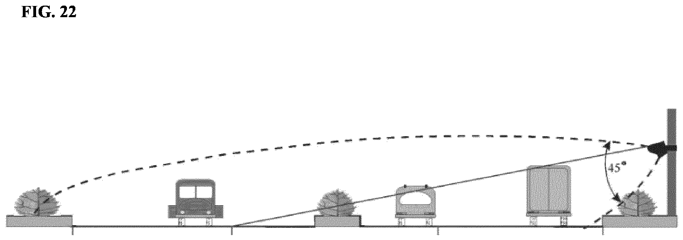

In some embodiments, one RSU is installed every 50m along the connected automated highway for one direction. The height is about 40 cm above the pavement. A RSU should be perpendicular to the road during installation. In some embodiments, the installation angle of RSU is as shown in Fig. 22.

### Vehicle/OBU

### OBU Module Design

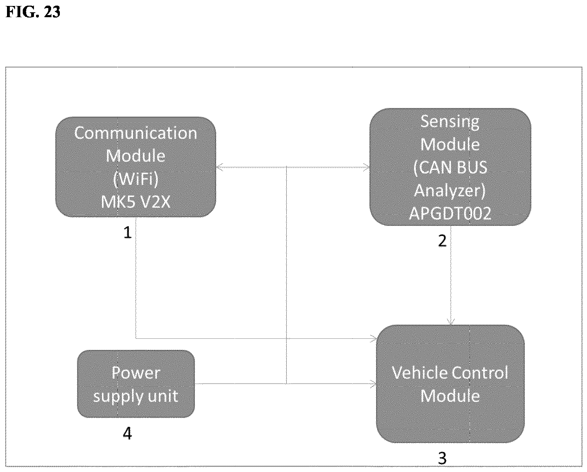

Description of an example of OBU (Fig. 23).

The communication module (1) is used to receive both information and command instruction from a RSU. The data collection module (2) is used to monitor the operational state, and the vehicle control module (3) is used to execute control command.

### Communication module

### OBU installation

Technical Specifications:
- Standard Conformance: IEEE 802.1 1p - 2010
- Bandwidth: 10 MHz
- Data Rates: 10 Mbps
- Antenna Diversity CDD Transmit Diversity
- Environmental Operating Ranges: -40°C to + 55°C
- Frequency Band: 5 GHz
- Doppler Spread: 800 km/h
- Delay Spread: 1500ns
- Power Supply: 12/24V

Exemplary on-market components that may be employed are:
A. MK5 V2X from Cohda Wireless
   http://cohdawireless.com/
B. StreetWAVE from Savari
   http://savari.net/technology/road-side-unit/

### Data collection module

The data collection module is used to monitor the vehicle operation and diagnosis.

### OBU_TYPE_A (CAN BUS Analyzer)

Hardware technical Specifications
- Intuitive PC User Interface for functions such as configuration, trace, transmit, filter, log etc.
- High data transfer rate

Exemplary on-market components that may be employed are:
A. APGDT002, Microchip Technology Inc.
   http://www.microchip.com/
B. Vector CANalyzer9.0 from vector
   https://vector.com

Software technical Specifications
- Tachograph Driver alerts and remote analysis.
- Real-Time CAN BUS statistics.
- CO2 Emissions reporting.

Exemplary on-market components that may be employed are: CAN BUS ANALYZER USB V2.0

### Vehicle control module

### Remote control system

Technical Specifications
- Low power consumption
- Reliable longitudinal and lateral vehicle control

Exemplary on-market components that may be employed are: Toyota's remote controlled autonomous vehicle. In Toyota's system, the captured data can be sent to a remote operator. The remote operator can manually operate the vehicle remotely or issue commands to the autonomous vehicle to be executed by various vehicle systems. (See e.g., US9494935 B2, herein incorporated by reference in its entirety).

### Installation

### OBU_TYPE_A (CAN BUS Analyzer)

- Connect the tool to the CAN network using the DB9 connector or the screw in terminals

### TCU/TCC

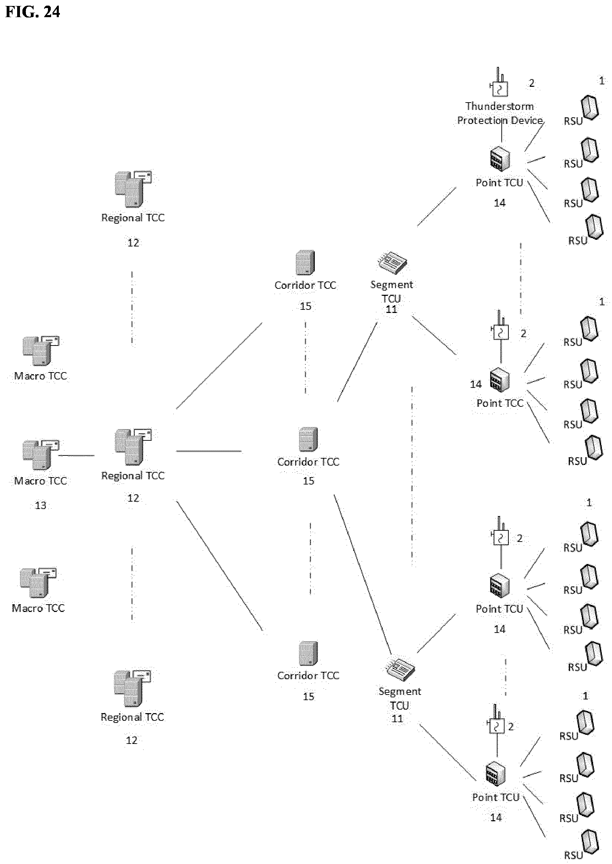

See e.g., Fig. 24. The TCC/ TCU system is a hierarchy of traffic control centers (TCCs) and traffic control units (TCUs), which process information and give traffic operations instructions. TCCs are automatic or semi-automated computational centers that focus on data gathering, information processing, network optimization, and traffic control signals for a region that is larger than short road segments. TCUs are smaller traffic control units with similar functions, but covering a small freeway area, ramp metering, or intersections. There are five different types of TCC/TCU. A point TCU collects and exchanges data from several RSUs. A segment TCC collects data and exchanges data from multiple Point TCUs, optimizes the traffic flow, and controls Point TCU to provide control signal for vehicles. A Corridor TCC collects data from multiple RSUs and optimizes the traffic in a corridor. A Regional TCC collects data from multiple corridors and optimizes traffic flow and travel demand in a large area (e.g. a city is covered by one regional TCC). A Macro TCC collects data from multiple Regional TCCs and optimizes the travel demand in a large-scale area.

For each Point TCU, the data is collected from a RSU system (1). A Point TCU (14) (e.g. ATC-Model 2070L) with parallel interface collects data from a RSU. A thunderstorm protection device protects the RSU and Road Controller system. The RSU unites are equipped at the road side.

A Point TCU (14) communicates with RSUs using wire cable (optical fiber). Point TCUs are equipped at the roadside, which are protected by the Thunderstorm protector (2). Each point TCU (14) is connected with 4 RSU unites. A Point TCU contains the engineering server and data switching system (e.g. Cisco Nexus 7000). It uses data flow software.

Each Segment TCU (11) contains a LAN data switching system (e.g. Cisco Nexus 7000) and an engineering server (e.g. IBM engineering server Model 8203 and ORACL data base). The Segment TCU communicates with the Point TCU using wired cable. Each Segment TCU covers the area along 1 to 2 miles.

The Corridor TCC (15) contains a calculation server, a data warehouse, and data transfer units, with image computing ability calculating the data collected from road controller (14). The Corridor TCC controls segment TCU (e.g., the Corridor TCC covers a highway to city street and transition). Traffic control algorithms are used to control segment and point TCUs (e.g., adaptive predictive traffic control algorithm). The data warehouse is a database, which is the backup of the corridor TCC (15). The Corridor TCC (15) communicates with segment TCU (11) using wired cord. The calculation work station (KZTs-M1) calculates the data from segment TCU (15) and transfers the calculated data to Segment TCU (11). Each corridor TCC covers 5-20 miles.

Regional TCC (12). Each regional TCC (12) controls multiple Corridor TCCs in a region (e.g. covers the region of a city) (15). Regional TCCs communicate with corridor TCCs using wire cable (e.g. optical fiber).

Macro TCC (13). Each Macro TCC (13) controls multiple regional TCCs in a large-scale area (e.g., each state will have one or two Macro TCCs) (12). Macro TCCs communicate with regional TCCs using wire cable (e.g. optical fiber).

### High resolution map and vehicle location

### High resolution map

Technical Specifications
- Show carriageway markings and other traffic signs that are printed on roads correctly and clearly.
- As changes occur in the road network, the map will update the information by itself.
- Map error is less than 10 cm with 99% confidence.

Exemplary on-market components that may be employed are:
A. HERE
   https://here.com/en/products-services/products/here-hd-live-map

The HD maps of HERE allow highly automated vehicles to precisely localize themselves on the road. In some embodiments, the autonomous highway system employs maps that can tell them where the curb is within a few centimeters. In some embodiments, the maps also are live and are updated second by second with information about accidents, traffic backups, and lane closures.

### Differential Global Positioning System:

Hardware technical Specifications
- Locating error less than 5 cm with 99% confidence
- Support GPS system

Exemplary on-market components that may be employed are:
A. Fleetmatics
   https://www.fleetmatics.com/
B. Teletrac Navman
   http://drive.teletracnavman.com/
C. Fleetmatics
   http://lead.fleetmatics.com/

Some portions of this description describe the embodiments of the invention in terms of algorithms and symbolic representations of operations on information. These algorithmic descriptions and representations are commonly used by those skilled in the data processing arts to convey the substance of their work effectively to others skilled in the art. These operations, while described functionally, computationally, or logically, are understood to be implemented by computer programs or equivalent electrical circuits, microcode, or the like. Furthermore, it has also proven convenient at times, to refer to these arrangements of operations as modules, without loss of generality. The described operations and their associated modules may be embodied in software, firmware, hardware, or any combinations thereof.

Certain steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all of the steps, operations, or processes described.

Embodiments of the invention may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Embodiments of the invention may also relate to a product that is produced by a computing process described herein. Such a product may comprise information resulting from a computing process, where the information is stored on a non-transitory, tangible computer readable storage medium and may include any embodiment of a computer program product or other data combination described herein.

## Claims

1. An autonomous vehicle, AV, control system comprising:
a) an RSU communication module configured to communicate with one or more roadside units, RSUs, (306) and to receive vehicle-specific control instructions from said one or more RSUs (306); and
b) a vehicle control module configured to control a vehicle comprising said AV control system according to said vehicle-specific control instructions,
wherein said vehicle-specific control instructions comprise instructions for vehicle longitudinal and lateral position; speed; and steering and control.

2. The AV control system of claim 1 wherein said vehicle-specific control instructions comprise control instructions for speed, spacing, lane designation, vehicle following, lane changing, and/or route guidance.

3. The AV control system of any one of claims 1-2, wherein said vehicle-specific information comprises weather information, pavement conditions, and/or estimated travel time.

4. The AV control system of any one of claims 1-3, wherein said RSU communication module transmits data to an RSU (306), said data comprising vehicle static information and/or vehicle dynamic information.

5. The AV control system of claim 4, wherein said vehicle static information comprises vehicle identifier, vehicle size, vehicle type, vehicle software information, and/or vehicle hardware information.

6. The AV control system of any one of claims 4-5, wherein said vehicle dynamic information comprises a timestamp, GPS coordinates, vehicle longitudinal and lateral position, vehicle speed, and/or vehicle origin/destination information.

7. The AV control system of any one of claims 1-6, further comprising a TCC/TCU communication link configured to communicate with traffic control centers, TCCs, and/or traffic control units, TCUs.

8. The AV control system of any one of claims 1-7, further comprising a data collection module configured to monitor the operational state of a vehicle comprising said AV control system.

9. The AV control system of any one of claims 1-8, further comprising an in-vehicle interface.

10. The AV control system of any one of claims 1-9 wherein said RSUs (306) provide data sensing, data processing, control signal delivery, and/or information distribution.

11. The AV control system of any one of claims 1-10, further comprising a V2V communication module configured to communicate with a second AV control system.

12. The AV control system of any one of claims 1-11 configured to distribute driving tasks with a TCC/TCU (101) and RSU network (102).

13. A connected and automated vehicle, CAV, comprising the AV control system of any one of claims 1-12.

14. The CAV of claim 13, further comprising traffic sensors and/or environment sensors.

15. The CAV of any one of claims 13-14, configured to be controlled by a transportation management system comprising TCCs/TCUs (101), a network (102) of RSUs (306), and a vehicle sub-system (103, 307).
